# EUROPÄISCHE PATENTSCHRIFT

(11) **EP 1 882 643 B1**
(45) Veröffentlichungstag und Bekanntmachung des Hinweises auf die Patenterteilung: **30.09.2009**
(21) Anmeldenummer: 07014147.8
(22) Anmeldetag: 19.07.2007
(51) Int. Cl.: B65D 81/22, B65D 83/08, A61F 13/00, B32B 27/12

(54) **Anordnung scheibenförmiger Faserverbundartikel in einem Verpackungsbehältnis**
Assembly of disc-like fibre composites in a packaging container
Agencement d'articles renforcés par des fibres en forme de disques dans un récipient d'emballage

(30) Priorität: 26.07.2006 DE 102006035570
(43) Veröffentlichungstag der Anmeldung: 30.01.2008
(73) Patentinhaber: CMC Consumer Medical Care GmbH, 52353 Düren (DE)
(72) Erfinder: Römpp, Angela, 73105 Dümau (DE); Drumeva-Eberius, Albena, 89522 Heidenheim (DE); Mangold, Rainer, Dr., 89542 Herbrechtingen (DE)
(74) Vertreter: Friz, Oliver

(56) Entgegenhaltungen:
- WO-A-99/48456
- WO-A-03/070134
- JP-A- 2 156 914
- US-A- 1 973 903
- US-A- 5 024 325
- US-A- 5 344 007

## Beschreibung

Die Erfindung betrifft eine Anordnung einer Mehrzahl befeuchteter scheiben- bzw. padförmiger Faserverbundartikel in einem Verpackungsbehältnis mit einer Öffnung zur Abgabe der Faserverbundartikel an den Endverbraucher.

Eine Anordnung mit den Merkmalen des Oberbegriffs des Anspruchs 1 ist bekannt aus US-A-5,024,325.

Bei der Entnahme scheiben- bzw. padförmiger Faserverbundartikel aus einem eine Mehrzahl solcher Faserverbundartikel enthaltenden Verpackungsbehältnis kommt es oft zu Unannehmlichkeiten. Beispielsweise haften oder kleben die Faserverbundartikel aneinander, so dass sie häufig nicht problemlos einzeln entnommen werden können. Manchmal muss auf den zu entnehmenden Faserverbundartikel mit den Fingern ein solcher Druck ausgeübt werden, dass der Faserverbundartikel verknittert oder so zusammengefaltet wird, dass er vor dem Gebrauch erst unter Zuhilfenahme der Finger beider Hände wieder in seine ursprüngliche Form gebracht werden muss. Die vorstehenden Probleme stellen sich bei befeuchteten scheiben- bzw. padförmigen Faserverbundartikeln in wenigstens gleichem Maße. Hier kommt noch wesentlich die Verdunstungsproblematik und die Migration von Tränkflüssigkeit bei den übereinander liegenden Faserverbundartikeln hinzu. Es ist bereits eine Vielzahl scheiben- bzw. padförmiger Faserverbundartikel bekannt geworden, die bei Anordnung in einem Verpackungsbehältnis im Hinblick auf die vorstehend geschilderten Problemaspekte nicht befriedigend sind.

US 2003/0127104 A1 beschreibt eine stapelförmige Anordnung von mit Lösungsmitteln imprägnierten Pads aus Spunlace-Material in einem tiegelförmigen Verpackungsbehältnis. Die Pads liegen mit ihrer jeweiligen Faservliesschicht übereinander. Es stellen sich die vorgenannten Probleme.

AU-A-65793/86 beschreibt eine ähnliche Anordnung von mit Nagellackentferner imprägnierten Pads in einem tiegelförmigen Verpackungsbehältnis. Die mit Nagellackentferner imprägnierten Pads haben offenbar die Tendenz, eher an den Fingern zu kleben als aneinander zu haften, so dass die Entnahme angeblich kein Problem darstelle. Die Pads seien entweder aus gewebtem Stoff oder aus Papier. Es handelt sich also eher nicht um einen vliesförmigen Faserverbundartikel.

DE 199 16 640 A1 beschreibt einen als Applikatorkissen bezeichneten Faserverbundartikel, bestehend aus einem absorbierenden Kissen und einer für Fluid undurchlässigen Trägerlage, die zugleich einen in eine Gebrauchslage schwenkbaren Griff zum besseren Erfassen des Applikatorkissens aufweist. Es handelt sich um vor dem Gebrauch trockene Faserverbundartikel, die zum Auftragen von Materialien, wie Puder, Fluid, Cremes oder Schäume, oder zum Auftragen von Nagellack oder Nagellackentferner verwendet werden können.

EP 0 978 247 A1 befasst sich mit der Anordnung von gefalteten, mit einer Tränkflüssigkeit, die u. a. ein leicht flüchtiges Lösungsmittel enthält, beaufschlagten feuchten Tüchern in einem Verpackungsbehältnis. Um die Verdunstung und die Migration der Tränkflüssigkeit zu verringern, werden separate Verdunstungsschutzlagen zwischen den Tüchern verwendet, wobei vorzugsweise jeweils nach fünf bis zehn Tüchern eine Verdunstungsschutzlage angeordnet ist.

WO 2004/108036 A1 beschreibt einen scheiben- bzw. padförmigen Faserverbundartikel mit einer eine Tränkflüssigkeit enthaltenden Faservlieslage und einer flüssigkeitsundurchlässigen Folienlage, wobei die Lagen zumindest bereichsweise am Rand miteinander versiegelt sind. Durch die Folienlage soll der Benutzer nicht mit der in der Faservlieslage enthaltenen Flüssigkeit in Kontakt kommen. Die Druckschrift lehrt ferner, den Faserverbundartikel um eine zentrale Achse zu falten und die aufeinander gefalteten Abschnitte am Umfang dichtend miteinander zu verbinden. Auf diese Weise wird ein abgedichteter Umschlag gebildet, der einen wirksamen Verdunstungsschutz darstellt. Dies ist aufwendig, und die Faserverbundartikel lassen sich nicht platzsparend anordnen.

EP 0 974 286 B1 beschreibt einen padförmigen Applikator mit einem porösen Trägermaterial, auf dessen eine Seite ein Make-up-Produkt aufgebracht ist, welches auf die Haut des Benutzers übertragen werden soll. Der Applikator umfasst des Weiteren auf der dem Make-up-Produkt gegenüberliegenden Seite der porösen Trägerschicht eine Folienlage. Die Aufbringung des Make-up-Produkts ist auf der ersten Trägerschicht inselförmig, so dass diese einen im Wesentlichen produktfreien Umfangsbereich aufweist.

EP 0 527 779 B1 beschreibt einen Verbundartikel zum Aufbringen oder Entfernen von Flüssigkeit oder einer festen Substanz mit einer absorbierenden Lage, einer undurchlässigen Sperrlage und einem biegsamen Griff, der auf die flüssigkeitsundurchlässige Sperrlage aufgebracht ist. Die absorbierende Lage kann bereits herstellerseitig mit einem Kosmetikum, einem Arzneimittel oder Lösungsmittel beaufschlagt sein. Der Handgriff ist etwa mit einem hälftigen Bereich auf die undurchlässige Sperrlage aufgeklebt, wobei die andere Hälfte einen von der Sperrlage nach oben klappbaren manuell ergreifbaren Bereich des Handgriffs bildet. Die den Handgriff bildende Schicht des Verbundartikels ist kongruent zu den übrigen Schichten und bildet eine Oberseite des Verbundartikels.

Wie eingangs bereits erwähnt, liegt der vorliegenden Erfindung die Aufgabe zugrunde, die Entnehmbarkeit befeuchteter scheiben- bzw. padförmiger Faserverbundartikel aus einem eine Mehrzahl solcher Artikel aufnehmenden Verpackungsbehältnis zu verbessern, wobei insbesondere eine hohe Qualität im Hinblick auf den visuellen Eindruck und die objektive Brauchbarkeit der Artikel sowie ein möglichst gleichförmiger Feuchtegehalt der entnommenen Artikel erreicht werden kann.

Diese Aufgabe wird erfindungsgemäß gelöst durch eine Anordnung mit den Merkmalen des Anspruchs 1.

Dadurch, dass die Faserverbundartikel jeweils dieselbe Orientierung aufweisen, derart, dass immer dieselbe Oberseite (jeweils erste oder jeweils zweite Oberseite) zur Öffnung des Verpackungsbehältnisses hin orientiert sind, wird eine Reihe von Vorteilen erzielt: Zum einen wird der Verdunstungsschutz bei den Faserverbundartikeln verbessert. Die Folienlage als Zwischenschicht verhindert auch weitgehend die schwerkraftbedingte Flüssigkeitsmigration zum Tiegelboden hin. Außerdem wird durch die Folienlage ein Verkleben oder Verhaken der Scheiben- bzw. padförmigen Faserverbundartikel untereinander verhindert. Dies erweist sich insbesondere bei einer Stapelbefeuchtung der Faserverbundartikel als vorteilhaft, da in diesem Fall verhindert wird, dass Flüssigkeit durch die Artikel durchdrückt und die Lagen aneinander grenzender Artikel miteinander in nachteiliger Weise verbindet.

Die Folienlage dient aber auch als Entnahmehilfe. Beim Entnehmen eines zuoberst liegenden Faserverbundartikels gleitet nämlich die Faservlieslage gegen die Folienlage des darunter liegenden Artikels bzw. gleitet die Folienlage gegen die Faservlieslage des darunter liegenden Artikels. Auf diese Weise ist es möglich, den betreffenden Faserverbundartikel zu entnehmen, ohne dass der Benutzer mit den Fingern einen hohen Druck auf den Faserverbundartikel ausüben muss. Ein leichter Druck an jeweils zwei gegenüberliegenden Randbereichen führt dazu, dass der so ergriffene Faserverbundartikel unter Ausbildung einer leichten Wölbung gegen die entsprechende Oberseite des darunter liegenden Artikels gleitet und in besonders komfortabler Weise entnommen werden kann, und zwar ohne dass er übermäßig gefaltet oder zerknittert wird. Es erweist sich als ganz besonders vorteilhaft, dass zwischen den übereinander angeordneten Faserverbundartikeln und der Innenwand des Verpackungsbehältnisses kein Freiraum vorgesehen werden muss, in den der Benutzer mit einem Finger eingreifen kann. Das Verpackungsbehältnis kann die übereinander gestapelten Faserverbundartikel im Wesentlichen spielfrei und im Wesentlichen wenigstens nahezu daran angrenzend umgeben.

Bei derart angeordneten Faserverbundartikeln erweist es sich als vorteilhaft, dass diese auch nach dem manuellen Entnehmen durch einen Benutzer eine hervorragende Rückstellkraft, also eine hohe Eigenstabilität, aufweisen. Sie zeigen also nach dem Entnehmen keine bleibende Verformung und insbesondere keine Knitterfalten. Ein Entfalten mit beiden Händen entfällt daher. Als Maß für die Rückstellkraft der Faserverbundartikel kann die Ermittlung der Biegesteifigkeit herangezogen werden.

Des Weiteren erweist es sich als vorteilhaft, dass die Folie und insbesondere eine Farbgebung der Folie als Orientierungshilfe beim Ergreifen der Faserverbundartikel dienen kann. Durch die infolge der Folienlage nur einseitige Befeuchtung der Faserverbundartikel wird für den Anwender ein als vorteilhaft empfundenes "Dual-Prinzip" dargeboten, nämlich einer feuchten, die erste Oberseite bildende Faservlieslage und einer trockenen, die zweite Oberseite bildende Folienlage, das sich einer hohen Akzeptanz erfreut.

Des Weiteren erweist es sich als vorteilhaft, dass die Faserverbundartikel jeweils mit ihrer Folienlage zur Öffnung des Verpackungsbehältnisses zugewandt sind. Dadurch wird der Verdunstungsschutz insbesondere bei dem zuoberst liegenden Faserverbundartikel verbessert. Zudem wird dem Anwender durch die Folienlage eine trockene Oberseite beim Eingriff in das Verpackungsbehältnis angeboten.

Vorteilhafterweise ist die Anordnung einer Mehrzahl befeuchteter scheiben- bzw. padförmiger Faserverbundartikel derart, dass die Faserverbundartikel kongruent, also deckungsgleich, aufeinander gestapelt sind.

Unter einem Lösungsmittel versteht man eine Flüssigkeit, die andere Flüssigkeiten oder Feststoffe lösen kann, ohne dass es dabei zu chemischen Reaktionen zwischen gelöstem Stoff und lösender Flüssigkeit kommt.

Des Weiteren erweist sich die erfindungsgemäße Anordnung als besonders vorteilhaft, wenn die Komponente des nicht-wässrigen Lösungsmittels ein flüchtiges Lösungsmittel ist.

Flüchtig beschreibt das Bestreben eines Lösungsmittels zu verdunsten.

Insbesondere vorteilhaft ist, wenn die Komponente des nicht-wässrigen Lösungsmittels entnommen ist aus der Gruppe enthaltend mittel flüchtige oder leicht flüchtige Lösungsmittel oder Kombinationen davon.

Im Rahmen dieser Erfindung wird unter einem leicht flüchtigen Lösungsmittel ein Lösungsmittel mit einer Verdunstungszahl kleiner 10 verstanden.

Im Rahmen dieser Erfindung wird unter einem mittel flüchtigen Lösungsmittel ein Lösungsmittel mit einer Verdunstungszahl von 10 bis 35 verstanden.

Die Bestimmung der Verdunstungszahl erfolgt nach DIN 53170: 1991-08. Unter der Verdunstungszahl wird der Quotient aus der Verdunstungszeit der zu prüfenden Flüssigkeit und der Verdunstungszeit von Diethylether als Vergleichsflüssigkeit verstanden.

Die Komponente des nicht-wässrigen Lösungsmittels ist vorzugsweise entnommen aus der Gruppe enthaltend Aceton, Ethylacetat, Butylacetat, Butyrolacton, Methylacetat, Ethanol, Isopropanol, Ethyllactat, 1-Methoxy-2-Propanol und Methylethylketon oder Kombinationen.

Der Anteil des nicht-wässrigen Lösungsmittels am Gesamtgewicht der Tränkflüssigkeit beträgt 20 bis 90 Gew.-%. Weiter vorzugsweise beträgt der Anteil des nicht-wässrigen Lösungsmittels am Gesamtgewicht der Tränkflüssigkeit 30 - 80 Gew.-%, insbesondere vorzugsweise 40 - 70 Gew.-%.

Die erfindungsgemäße Anordnung erweist sich besonders vorteilhaft, wenn die Faserverbundartikel im Mittel einen Feuchtegehalt von wenigstens 200 Gew.-% und von höchstens 750 Gew.-% ihres Trockengewichts aufweisen.
In weiterer vorteilhafter Ausführung weisen die Faserverbundartikel im Mittel einen Feuchtegehalt von wenigstens 250 Gew.-% und von höchstens 700 Gew.-%, weiter insbesondere von wenigstens 300 Gew.-% und höchstens 650 Gew.-%, weiter insbesondere von wenigstens 350 Gew.-% und höchstens 600 Gew.-% auf.

Die Folienlage der Faserverbundartikel weist eine Dicke zwischen 10 und 30 µm auf. Die Folienlage weist vorzugsweise ein Flächengewicht von 10 bis 40 g/m² auf. Für die Folienlage können Folien aus allen Kunststoffen eingesetzt werden. Die Folienlage umfasst Polymere der Gruppe enthaltend Polyolefine, Polyamide, Polyester, Metallocen-katalysierte Polymere, Titanoxid-haltige Polymere, Farbstoff -oder Pigmenthaltige Polymere oder Kombinationen hiervon. Die Folienlage umfasst insbesondere vorzugsweise Polymere der Gruppe enthaltend PE (Polyethylen), LDPE (low density Polyethylen), LLDPE (linear low density Polyethylen), MDPE (medium density Polyethylen), HDPE (high density Polyethylen) PP (Polypropylen), Metallocen-katalysiertes LLPE/LLDPE, Metallocen-katalysiertes LLDPE, Metallocen-katalysiertes PP, Metallocen-katalysiertes PE und deren Mischungen, Titanoxid-haltige Polymere, Farbstoff- oder Pigmenthaltige Polymere oder Kombinationen hiervon.

Die Folienlage kann auch in Form eines Vlies-Folien-Laminats eingesetzt werden.

Die Folienlage wird aus einer flüssigkeitsundurchlässigen Folie gebildet.

Die Faservlieslage der Faserverbundartikel weist ein Flächengewicht von 40 bis 350 g/m², insbesondere von 60 bis 250 g/m² und weiter insbesondere von 100 bis 200 g/m² auf.

Die Angabe der Flächengewichte der Faservlieslage bzw. Folienlage bzw. des Faserverbundartikels ist stets bezogen auf die noch nicht befeuchtete Faservlieslage bzw. Folienlage bzw. des noch nicht befeuchteten Faserverbundartikels zu verstehen.

Die Faservlieslage weist vorteilhafterweise eine Dicke von 0,2 bis 6,0 mm, insbesondere von 0,6 bis 5,0 mm, insbesondere von 1,0 bis 3,50 mm, insbesondere von 1,2 bis 2,5 mm, gemessen im trockenen Zustand, und eine Dicke von 0,2 bis 4,5 mm, insbesondere von 0,6 bis 3,5 mm, insbesondere von 1,0 bis 2,5 mm, gemessen im getränkten Zustand, jeweils gemessen bei einem Prüfdruck von 0,5 kPa, auf.

Nach einer bevorzugten Ausführungsform der erfindungsgemäßen Anordnung umfasst die Faservlieslage der jeweiligen Faserverbundartikel Stapelfasern einer Länge von 3 bis 60 mm.
Als Stapelfasern werden in ihrer Länge auf ein definiertes Maß begrenzte Fasern verstanden, welche Chemiefasern, also aus natürlichen oder synthetischen Polymeren industriell hergestellte Fasern, und natürliche Fasern sein können. Wenn Chemiefasern als Stapelfasern verwendet werden, so können diese in vorteilhafter Weiterbildung auch Längen von 15 bis 40 mm, insbesondere von 15 bis 25 mm aufweisen. Die Längen von natürlichen Stapelfasern, wie beispielsweise Baumwollfasern betragen vorteilhafterweise 9 - 15 mm, insbesondere etwa 12 mm.

Die Stapelfasern umfassen vorzugsweise Mikrostapelfasern. Hierunter sind Stapelfasern einer Faserstärke < 1 dtex zu verstehen. Die synthetischen Mikrostapelfasern können vorzugsweise Polyester (PES)-Fasern oder Viskosefasern sein (Viskosefasern bestehen zwar aus natürlichen Zellulosemolekülen, die aber synthetisch zur Bildung von Fasern verarbeitet werden).

Der Anteil der Mikrostapelfasern in der Faservlieslage beträgt vorzugsweise 15 bis 85 Gew.-%, insbesondere 15 bis 65 Gew.-% und weiter insbesondere 20 bis 30 Gew.-% der Faservlieslage.

Des Weiteren erweist es sich als vorteilhaft, wenn in der Faservlieslage zusätzlich bis 72 Gew.-%, insbesondere 15 bis 65 Gew.-% und weiter insbesondere 50 bis 65 Gew.-% Baumwollfasern enthalten sind.

Zur Vliesverfestigung erweist es sich als vorteilhaft, wenn in der Faservlieslage zusätzlich wärmeschmelzbare Bindefasern als Stapelfasern enthalten sind, insbesondere in einem gewichtsprozentualen Anteil von 10 bis 20 Gew.-%, insbesondere von 10 bis 18 Gew.-% und weiter insbesondere von 10 bis 15 Gew.-%. Bei den Bindefasern kann es sich vorteilhafterweise um Mehrkomponentenfasern, insbesondere um Bikomponenten-Fasern, handeln, und weiter insbesondere um Bikomponenten-Fasern mit einer Mantel/Kern-Anordnung der beiden Komponenten.
Diese Mehrkomponentenfasern haben in vorteilhafter Weise eine Faserstärke von 1,3 - 10 dtex, insbesondere von 1,3 - 3,0 dtex, und eine Faserlänge von 3 - 60 mm, insbesondere von 40 - 60 mm. Bei bevorzugtermaßen zu verwendenden Bikomponentenfasern kann es sich um Polyester (PES) /Copolyester (CO-PES)- Bikomponentenfasern handeln.

Es erweist sich in jedem Fall als vorteilhaft, wenn der Schmelzpunkt der wärmeschmelzbaren Bindefasern oder der niedrig schmelzenden Komponente der Mehrkomponentenfasern als Bindefasern geringer ist als der Schmelzpunkt von zusätzlich verwendeten Stapelfasern oder Mikrostapelfasern.

Die Faservlieslage der jeweiligen Faserverbundartikel umfasst in vorteilhafter Weise zu 20 bis 30 Gew.-% Mikrostapelfasern, zu 9 bis 17 Gew.-% Bindefasern und zu 58 bis 66 Gew.-% Baumwollfasern.

Die Angabe der Gewichtsanteile der Fasern ist stets bezogen auf die noch nicht befeuchtete Faserstruktur zu verstehen.

Des Weiteren erweist es sich als vorteilhaft, wenn die von der Faservlieslage gebildete erste Oberseite strukturiert ist. Die Strukturierung der ersten Oberseite kann dabei durch Wasserstrahlvernadelung, vorzugsweise in Form von Feinrillen erzielt werden.

In weiterer Ausführung kann die erste Oberseite geprägt sein, wobei unter "geprägt" die Anbringung von Vertiefungen mit einer Tiefe von größer 0,2 mm, insbesondere von wenigstens 0,25 mm, insbesondere von wenigstens 0,35 mm verstanden wird. Diese Vertiefungen weisen eine größere Tiefe auf als die Tiefe der die dem Fachmann bekannten, durch Wasserstrahlvernadelung erzeugten Feinrillenstruktur mit einer Tiefe von lediglich 0,05 - 0,2 mm. Dabei kann ein bereits vorverfestigtes Vliesmaterial insbesondere mit Hilfe eines Prägekalanders, gegebenenfalls auch unter Einwirkung von Wärme, mit einer Prägestruktur versehen werden. Geprägte Oberflächen lassen sich auch mittels Wasserstrahlvernadelung, insbesondere unter Anwendung der Siebtrommeltechnologie erzeugen.

In weiterer Ausführung kann eine Prägestruktur der Faservlieslage so gestaltet sein, dass diese Prägestruktur vollumfänglich von einem zweiten Bereich (radial außen) umgeben ist. Dieser zweite Bereich kann dabei ungeprägt sein oder auch eine von dieser ersten Prägestruktur verschiedene weitere Prägestruktur aufweisen.
Die die zweite Oberseite bildende Folienlage kann glatt oder mit Reibungseffekten ausgestattet sein.
Die die zweite Oberseite bildende Folienlage kann geprägt oder ungeprägt sein.

Die die zweite Oberseite bildende Folienlage kann einfarbig oder mehrfarbig sein.

Nach einer besonders bevorzugten Ausführungsform der erfindungsgemäßen Anordnung bestehen die scheiben- bzw. padförmigen Faserverbundartikel aus den genannten beiden Lagen, also aus der Faservlieslage und der Folienlage, die miteinander verbunden sind und einander kongruent überdecken.

Nach einer Ausführungsform kann die Faservlieslage unmittelbar mit der Folienlage verbunden sein.

Nach einer weiteren Ausführungsform kann die Faservlieslage und die Folienlage auch unter Verwendung eines Haftvermittlers adhäsiv, vorzugsweise mittels eines Heißschmelzklebers, verbunden sein.

Der eingesetzte Haftvermittler, vorzugsweise der eingesetzte Heißschmelzkleber, muss lösungsmittelfest sein, d.h. die Verbindung der Faservlieslage und der Folienlage wird nicht durch die Beaufschlagung mit einer Tränkflüssigkeit mit einem nicht-wässrigen Lösungsmittel gelöst.

Als Haftvermittler wird vorzugsweise ein Haftvermittler mit einem Flächengewicht von 1 - 10 g/m², insbesondere von 1 - 6 g/m², weiter insbesondere von 1 - 4 g/m² eingesetzt.

Der Haftvermittler wird vorzugsweise vollflächig aufgetragen.
Bei einer bevorzugten Ausführungsform der erfindungsgemäßen Anordnung weist die erste Oberseite eines Faserverbundartikels (Faservlieslage) zur zweiten Oberseite eines anderen Faserverbundartikels (Folienlage) eine
Gleitreibungszahl von < 1, vorzugsweise von < 0,8, gemessen nach dem nachfolgenden Test zur Ermittlung der Gleitreibungszahl auf.

Nach einer weiteren vorteilhaften Ausführungsform der erfindungsgemäßen Anordnung weisen die Faserverbundartikel eine Biegesteifigkeit von mindestens 10 mN und von höchstens 60 mN, vorzugsweise von von mindestens 20 mN und von höchstens 50 mN, gemessen nach dem nachfolgend beschriebenen Test zur Ermittlung der Biegesteifigkeit auf.

Die Faserverbundartikel können jede beliebige Form aufweisen. Die Faserverbundartikel haben vorzugsweise eine kreisförmige Form, vorzugsweise sind auch ovale Formen, ebenso quadratische oder rechteckige Formen denkbar.

Die Faserverbundartikel können beispielsweise kreisrund sein und einen Durchmesser von 40 bis 85 mm, insbesondere von 55 bis 80 mm und weiter insbesondere von 57 bis 70 mm aufweisen.

Die Faserverbundartikel können aber auch oval sein und eine Längserstreckung von 60 bis 100 mm, insbesondere von 70 bis 90 mm, weiter insbesondere von 75 bis 85 mm und eine Quererstreckung von 40 bis 80 mm, insbesondere von 50 bis 70 mm, weitere insbesondere von 55 bis 65 mm aufweisen.

Quadratische Pads haben vorzugsweise eine Seitenlänge zwischen 60 - 80 mm, insbesondere von 75 mm. Rechteckige Pads haben eine Fläche mit Maßen von vorzugsweise (70 - 100 mm) x (90 mm - 120 mm), insbesondere (85 mm - 95 mm) x (105 mm -115 mm).

Bei der erfindungsgemäßen Anordnung erweist es sich als besonders vorteilhaft, wenn das Verpackungsbehältnis starr oder halbstarr ausgebildet ist, sich also im Wesentlichen als form- oder verwindungsstabil bezeichnen lässt, so dass es bei der Handhabung zum üblichen Gebrauch seine Form im Wesentlichen unverändert beibehält.

Es erweist sich auch als vorteilhaft, wenn die Öffnung des Verpackungsbehältnisses im Wesentlichen eine gesamte Sichtseite des Verpackungsbehältnisses erfasst.

Insbesondere kann das Verpackungsbehältnis hierfür topfförmig ausgebildet sein.

Es erweist sich weiter als vorteilhaft, dass die Faserverbundartikel spielfrei zu einer Innenwand des Verpackungsbehältnisses angeordnet werden können, so dass ein Abstand zwischen den Faserverbundartikeln und der Innenwand in Umfangsrichtung durchgehend <6 mm, insbesondere < 5 mm, weiter insbesondere < 4 mm, weiter insbesondere < 3 mm ist. Dennoch können die Faserverbundartikel ohne weiteres entnommen werden.

Es erweist sich als vorteilhaft, wenn das Verpackungsbehältnis ein Schraubverschlussgefäß ist, welches insbesondere aus Materialien hergestellt ist entnommen aus der Gruppe von Polymeren, insbesondere PE, PP, Polystyrol, Styrol-Acryl-Copolymer, Glas oder Kombinationen der vorgenannten Materialien.

Eine zweckmäßige erfindungsgemäße Anordnung umfasst vorteilhafterweise wenigstens 10 Faserverbundartikel und höchstens 60 Faserverbundartikel, insbesondere höchstens 54 Faserverbundartikel und weiter insbesondere höchstens 40 Faserverbundartikel.

Die Faserverbundartikel sind vorzugsweise über ihre gesamte scheiben- bzw. padförmige Erstreckung im Wesentlichen gleichförmig mit Tränkflüssigkeit beaufschlagt. Die Tränkflüssigkeit kann vorteilhafterweise Zusatzstoffe aus einer oder mehreren der Gruppen der Pflanzenextrakte, Öle, insbesondere Pflanzenöle, Vitamine, Vitaminderivate, Duftstoffe, Parfüme, Rückfetter, pflegende Komponenten, Emollentien, Verdickungsmittel, Viskose erhöhende Stoffe, Tenside oder Farbstoffe enthalten. Als Öle können beispielsweise Mandelkernöl, Rhizinusöl, Avocadoöl enthalten sein. Als Vitamine können beispielsweise Vitamin E, Vitamin F, Panthenol enthalten sein. Als Pflanzenextrakt kann beispielsweise Aloe vera oder Kamille enthalten sein.

Weitere Merkmale, Einzelheiten und Vorteile der Erfindung ergeben sich aus den beigefügten Patentansprüchen, für deren jeweilige Merkmale in jeglicher Kombination mit Merkmalen anderer Patentansprüche Schutz in Anspruch genommen wird, sowie aus der zeichnerischen Darstellung und nachfolgenden Beschreibung einer bevorzugten Ausführungsform der erfindungsgemäßen Anordnung. In der Zeichnung zeigt:
- Figur 1: eine perspektivische Darstellung eines Verpackungsbehältnisses zur Aufnahme von scheiben-bzw. padförmigen Faserverbundartikeln;
- Figur 2: eine Schnittansicht durch eine erfindungsgemäße Anordnung einer Mehrzahl von scheiben- bzw. padförmigen Faserverbundartikeln in dem Verpackungsbehältnis nach Figur 1 (schematisch);
- Figur 3a: eine schematische perspektivische Ansicht eines Stapels mehrerer scheiben- bzw. padförmiger Faserverbundartikel;
- Figur 3b: eine in axialer Richtung des Stapels nach Figur 3a auseinandergezogene Darstellung dreier Faserverbundartikel;
- Figuren 4 und 5: Messungen nach Tabellen I bzw. II ;
- Figuren 6 bis 8: Ergebnisse eines Verdunstungstests und
- Figuren 9a bis 9c: eine schematische, nicht maßstabsgetreue Aufsicht auf ein Biegesteifigkeitsgerät mit Durchführung der Messung
- Figur 9d: eine Ansicht auf den Probenhalter in Richtung der Pfeile 9d in Figur 9a.

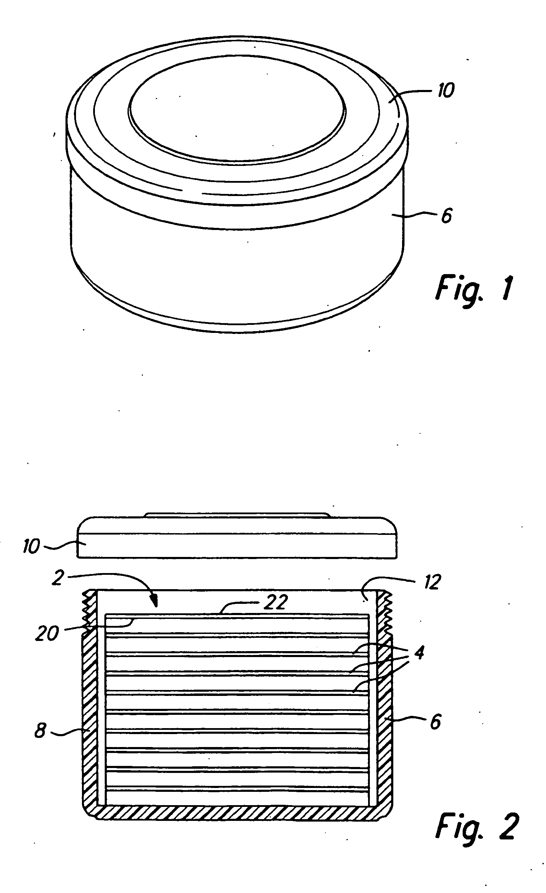

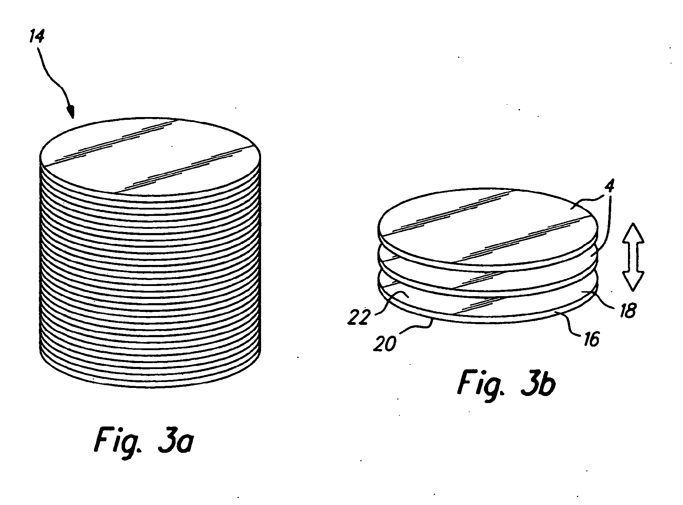

Die Figuren zeigen schematisch eine insgesamt mit dem Bezugszeichen 2 bezeichnete erfindungsgemäße bevorzugte Anordnung einer Mehrzahl im Wesentlichen gleichmäßig über ihre flächenhafte Erstreckung befeuchteter scheiben- bzw. padförmiger Faserverbundartikel 4 in einem Verpackungsbehältnis 6. Das Verpackungsbehältnis 6 ist starr oder halbstarr ausgebildet. Es umfasst eine im Wesentlichen topfförmige Basis 8 mit einem Schraubdeckel 10. Die topfförmige Basis 8 bildet eine kreisförmige Öffnung 12, die im Wesentlichen die gesamte Sichtseite der topfförmigen Basis 8 erfasst. Wie aus Figuren 2 und 3a ersichtlich, bilden die scheiben- bzw. padförmigen Faserverbundartikel 4 einen Stapel 14, der dann als Ganzes in dem Verpackungsbehältnis 6, wie in Figur 2 dargestellt, aufgenommen ist. Wie in Figur 3b schematisch dargestellt, bestehen die einzelnen scheiben- bzw. padförmigen Faserverbundartikel 4 im dargestellten Fall aus einer einzigen Faservlieslage 16 und einer hierzu kongruenten Folienlage 18, die aneinandergefügt sind. Die Faservlieslage 16 bildet eine erste Oberseite 20, und die Folienlage 18 bildet eine zweite Oberseite 22 eines jeweiligen Faserverbundartikels 4. Die Faserverbundartikel 4 sind derart orientiert in dem Stapel 14 und in dem Verpackungsbehältnis 6 angeordnet, dass ihre zweite Oberseite 22, die durch die Folienlage 18 gebildet ist, der Öffnung 12 des Verpackungsbehältnisses 6 zugewandt ist. Wenn ein Benutzer durch die Öffnung 12 auf den oben liegenden Faserverbundartikel 4 zugreift, berührt er also mit seinen Fingern die von der Folienlage 18 gebildete zweite Oberseite 22 des Faserverbundartikels. Wenn er mit zwei Fingern auf diametral gegenüberliegenden Seiten des Faserverbundartikels leicht Druck ausübt, so gleitet die Faservlieslage 16 im Wesentlichen widerstandslos gegenüber der zweiten Oberseite 22 der Folienlage 18 des darunter liegenden Faserverbundartikels, und der ergriffene Faserverbundartikel kann auf komfortable Weise entnommen werden, und zwar ohne stark zusammengedrückt oder zerknittert zu werden.

### Test zur Ermittlung der Gleitreibungszahl:

Das nachfolgende Testverfahren dient zur Beurteilung des Reibungsverhaltens von Flachmaterialien gegenüber bestimmten Oberflächen. Vorliegend soll das Reibungsverhalten von erfindungsgemäß zueinander orientierten scheiben- bzw. padförmigen Faserverbundartikeln ermittelt werden. Hierbei soll die von ihrer betreffenden Faservlieslage gebildete Oberseite gegenüber der von einer Folienlage gebildeten Oberseite eines anderen Faserverbundartikels gleiten. Die hierbei auftretende Gleitreibungskraft soll gemessen und hieraus dann die Gleitreibungszahl µ_{D} = F_{D}/F_{N} ermittelt werden. Die Prüfmethode ist angelehnt an die deutsche Norm DIN 53 375, Ausgabe November 1986, zur Bestimmung des Reibungsverhaltens von Kunststoff-Folien.

Aus einer Rollenware wird ein erster Probenkörper einer Größe von 150 x 300 mm in Längsrichtung der Rollenware ausgestanzt und auf der Grundplatte eines Probentischs befestigt.Ein zweiter Probenkörper wird mit einer Abmessung von 65 x 200 mm in Längsrichtung der Rollenware ausgestanzt und faltenfrei in einen Reibklotz mit einem Filzbelag eingespannt. Der Reibklotz weist eine Grundfläche von 63 mm * 63 mm Kantenlänge und eine Masse von 200 g (1,96 N) auf. Er wird über einen Faden (ohne Eigendehnung)am Kraftaufnehmer einer Zugprüfmaschine nach DIN 51 221 Klasse 1 befestigt. Eine solche Zugprüfmaschine ist das Prüfgerät Zwick Roell Typ Z010 von der Firma Zwick GmbH&Co.KG, 89079 Ulm, Deutschland. Das Zusatzgerät bestehend aus dem Probentisch und Reibklotz nach DIN 53 375 wird ebenfalls von der Firma Zwick angeboten. Der Reibklotz mit dem zweiten Probenkörper wird auf den ersten Probenkörper so aufgelegt, dass sich die gegeneinander zu testenden Oberseiten berühren. 15 Sekunden nach dem Auflegen des Reibklotzes, durch den eine Normalkraft F_{N} von 1,96 N ausgeübt wird, wird der Versuch gestartet. Die Prüfgeschwindigkeit beträgt 100 mm/min, sowohl für den eigentlichen Messweg von 120 mm, als auch für den Vor- und Nachmessweg von jeweils 10 mm. Der Vormessweg und der Nachmessweg werden zur Auswertung nicht herangezogen. Für die Ermittlung der Gleitreibungszahl µ_{D} wird nur der Kraftverlauf des Messwegs von 120 mm herangezogen. Der Test wird für wenigstens fünf unterschiedliche Paarungen von Faserverbundartikeln durchgeführt. Es wird ein Mittelwert x und die Standardabweichung s auf zwei Nachkommastellen gerundet angegeben.

Wie vorausgehend beschrieben, werden die Probenkörper der genannten Abmessungen aus einer Verbund-Rollenware ausgestanzt, da die in der erfindungsgemäßen Anordnung aufgenommenen Faserverbundartikel geringere Abmessungen haben. Bei der Rollenware handelt es sich aber um exakt dasjenige Verbundmaterial, aus dem die Faserverbundartikel zur Bildung der erfindungsgemäßen Anordnung ausgestanzt werden.

Als Tränkflüssigkeit wird eine Lösung mit 35 Gew.-% Aceton (Aceton zu Analyse; von Merck KGaA, Darmstadt) und der Rest deionisiertes Wasser eingesetzt.

Der Versuch wird bei einer Raumtemperatur von 23° und einer Luftfeuchtigkeit von 33% durchgeführt.

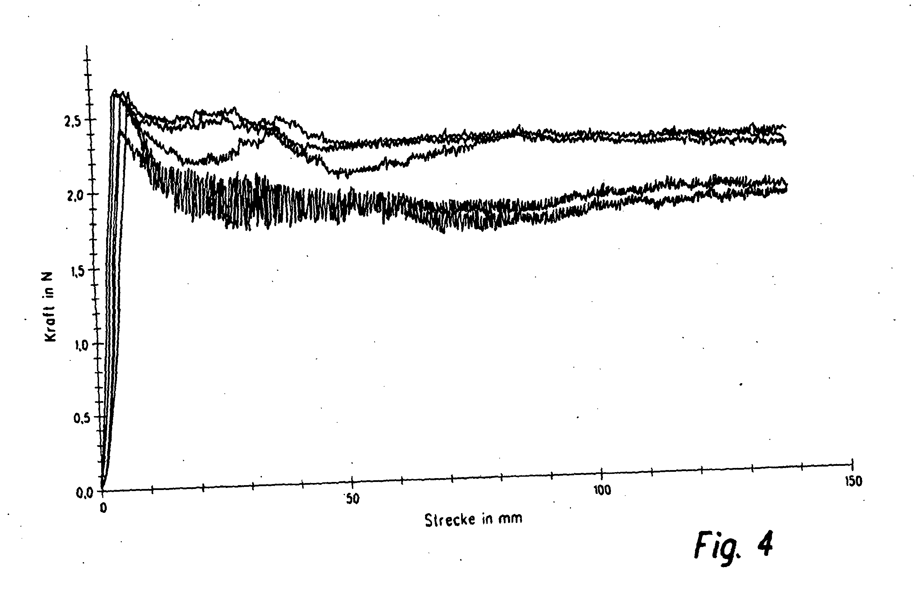

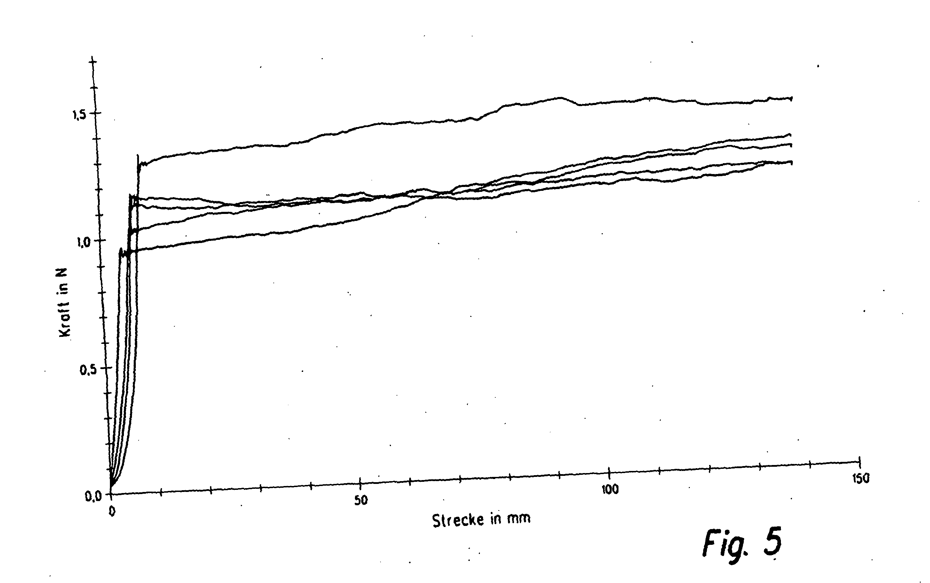

Die nachfolgenden Tabellen zeigen das Ergebnis der Gleitreibungszahl von Faserverbundartikeln, wobei gemäß Tabelle I die Faservlieslage des einen Faserverbundartikels gegenüber der Faservlieslage des anderen Probenkörpers gleitet, während bei Tabelle II die Faservlieslage des einen mit dem Reibklotz bewegten Probenkörpers gegenüber der Folienlage des anderen am Probentisch ruhenden Probenkörpers gleitet. Die mittlere Gleitreibungszahl µ_{D} liegt bei den Messungen gemäß Tabelle I bei 1,1 und bei den Messungen gemäß Tabelle II bei 0,61. Figur 4 zeigt die Messung nach Tabelle I und Figur 5 zeigt die Messung nach Tabelle II.

**Tabelle I**

| Nr. | Gleitreibungszahl µ_{D} | F mittel [N] | Mittelwert F min Sp [N] | Mittelwert F max Sp [N] |
|---|---|---|---|---|
| 1 | 0,95 | 1,87 | 1,82 | 1,90 |
| 2 | 1,16 | 2,27 | 2,25 | 2,28 |
| 3 | 0,98 | 1,93 | 1,89 | 1,96 |
| 4 | 1,20 | 2,35 | 2,33 | 2,36 |
| 5 | 1,21 | 2,36 | 2,36 | 2,38 |

| | | | | |
|---|---|---|---|---|
| Mittelwert x = 1,10 mit einer Standardabweichung s = 0,12 | | | | |

**Tabelle II**

| Nr. | Gleitreibungszahl µ_{D} | F mittel [N] | Mittelwert F min Sp [N] | Mittelwert F max Sp [N] |
|---|---|---|---|---|
| 1 | 0,58 | 1,14 | 1,13 | 1,15 |
| 2 | 0,72 | 1,42 | 1,40 | 1,42 |
| 3 | 0,59 | 1,15 | 1,11 | 1,15 |
| 4 | 0,60 | 1,17 | 1,12 | 1,17 |
| 5 | 0,58 | 1,14 | - | 1,13 |

| | | | | |
|---|---|---|---|---|
| Mittelwert x = 0,61 mit einer Standardabweichung s = 0,06 | | | | |

### Test zur Ermittlung der Verdunstung:

Es wurden erfindungsgemäße Anordnungen von mit einer Testflüssigkeit getränkten Faserverbundartikeln mit einer Faservlieslage und einer Folienlage in der erfindungsgemäß bevorzugten beanspruchten Orientierung in einem tiegelförmigen Verpackungsbehältnis mit Deckelverschluss untersucht. In entsprechender Weise wurden Faserverbundartikel mit derselben Faservlieslage, jedoch ohne zusätzliche Folienlage untersucht. Die Testflüssigkeit besteht bei drei Testreihen aus 35 Gew.-% bzw. 55 Gew.-% bzw. 75 Gew.-% Aceton (zur Analyse; von Merck KGaA, Darmstadt) (Nagellackentferner) und Rest jeweils deionisiertes Wasser. Der Test wurde bei einer Raumtemperatur T = 23°C, bei einer Luftfeuchtigkeit von 33 % durchgeführt. Es wurde dabei eine bevorzugte Ausführungsform der stapelförmigen Anordnung von 30 Faserverbundartikeln, mit einer Faservlieszusammensetzung von 60 Gew.-% Baumwollfasern, 15 Gew.-% Bikomponentenfasern, 25 Gew.-% Mikrostapelfasern, vermessen: Die stapelförmige Anordnung der Faserverbundartikel war derart, dass jeweils die Folienlage der Faserverbundartikel nach oben zum Deckel hin orientiert war.

Die vermessenen Faserverbundartikel waren kreisförmig mit einem Durchmesser von 5,7 cm. Die gesamte Anordnung wurde dabei jeweils mit 75 ml Testflüssigkeit versetzt.

Testdurchführung:
1. Das Verpackungsbehältnis im offenen Zustand 30 min stehen lassen. Innerhalb dieser Zeit wird das Verpackungsbehältnis alle 5 min gewogen.
2. Eine Stunde das Verpackungsbehältnis im geschlossenen Zustand ruhen lassen. Nach dem Öffnen des Verpackungsbehältnisses sofort wieder wiegen.
3. Punkt 1 wiederholen.
4. Punkt 2 wiederholen.
5. Punkt 1 wiederholen.
6. Punkt 2 wiederholen.
7. Punkt 1 wiederholen.
8. Das Verpackungsbehältnis im offenen Zustand belassen, alle 30 min wiegen, noch einige Male.

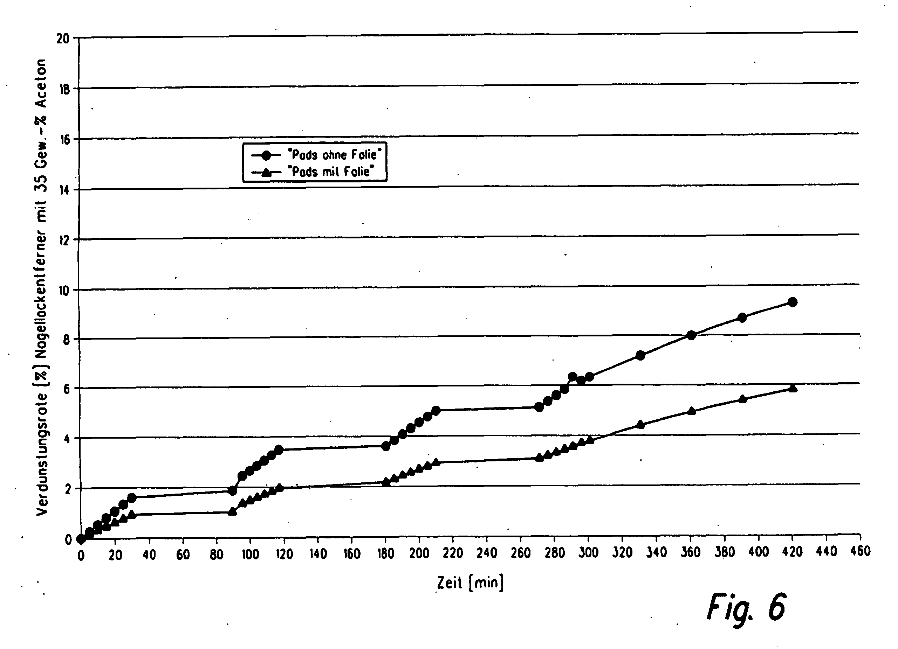

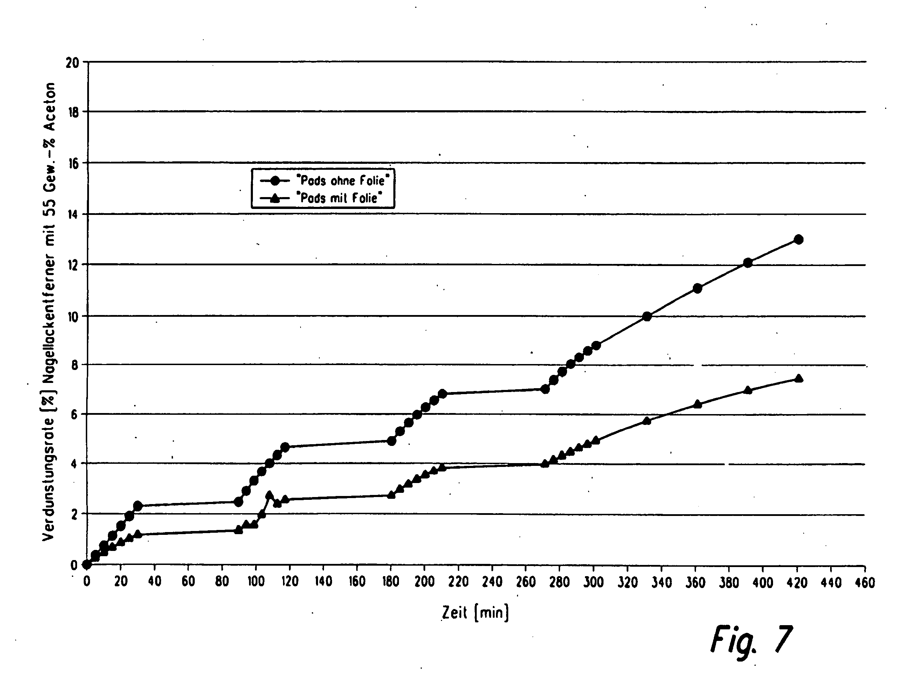

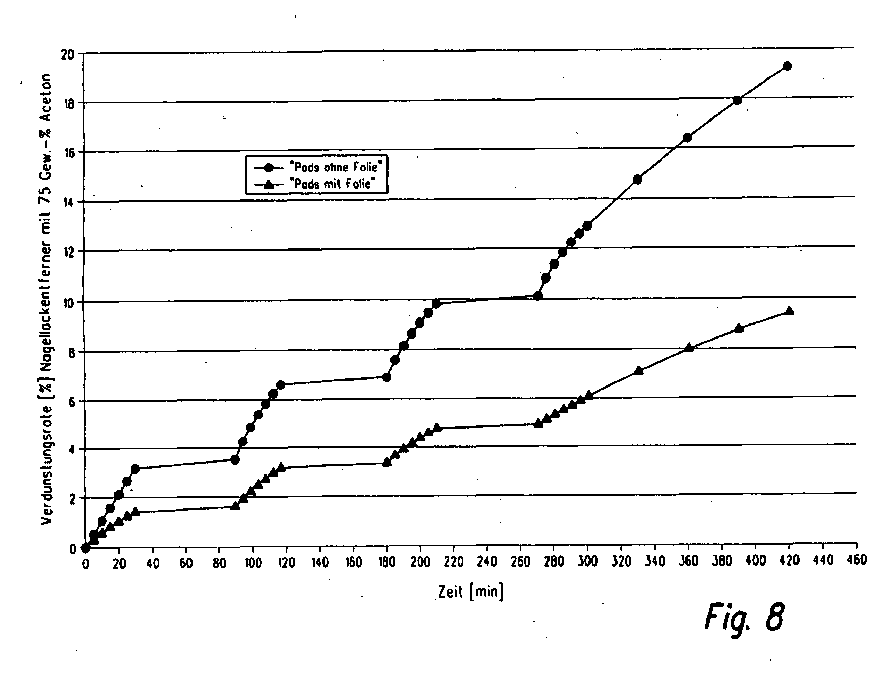

Die Figuren 6 bis 8 zeigen die Ergebnisse der prozentualen Verdunstungsrate der Testflüssigkeit, welche rechnerisch aus den durch ständiges Abwiegen erhaltenen Daten ermittelt wurden. Man erkennt, dass diese vermessene erfindungsgemäße Anordnung mit einer Folienlage zu einer deutlich reduzierten Verdunstung gegenüber der Verwendung von Faserverbundartikeln ohne eine solche Folienlage führt.

### Test zur Ermittlung der Biegesteifigkeit

Zur Ermittlung der Rückstellkraft, also der Eigenstabilität von Faserverbundartikeln zur Verwendung in einer erfindungsgemäß beanspruchten Anordnung, wird die Biegesteifigkeit von jeweils zwanzig Mustern unter Verwendung eines kommerziell erhältlichen Geräts zur Ermittlung der Biegesteifigkeit, bestimmt (bei 23°C und 33% Luftfeuchtigkeit). Für die aktuelle Messung wurde der Gerättyp 58963.013 der Firma Karl Frank GmbH, Weinheim-Birkenau, DE, verwendet. Es kann auch jedes ähnliche Gerät verwendet werden, wobei die Grundeinstellungen des Gerätes (Biegelänge (Kraftarm), Biegewinkel,
Winkeldrehgeschwindigkeit) und auch der definierte Probenkörper beachtet werden müssen.
Es wurden jeweils zwanzig Muster befeuchteter Faserverbundartikel mit einer Faservlieslage und einer Folienlage gemessen.
Die vermessenen erfindungsgemäßen Faserverbundartikel waren mit einer Lösung aus 35 Gew-% Aceton und der Rest deionisiertes Wasser getränkt.

Ebenso wurden verschiedene auf dem Markt erhältliche Wettbewerbsmuster vermessen. Dabei handelte es sich um befeuchtete Nagellackentfernerpads der Marke "essence", "cadea" und "ebelin" und Nagellackentfernerpads der Firma "wimex",. Bei diesen Wettbewerbsmustern waren unterschiedliche Stückzahlen, zwischen 20 - 30 Pads in einer Dose angeordnet.
Bei den Rezepturen der Tränkflüssigkeiten handelt es sich wie folgt um:
"cadea": Butyrolactone, Diethylene Glycol, Butoxyethanol, Fragrance Parfum, Limonene, Citral, Butylphenyl, Methylpropional, Linalool;
"wimex": Butyrolactone, 1-Methoxy- 2-propanol, Water, Parfüm;
"essence": Butyrolactone, Aqua, Propylene glycol, PEG-75 Lanolin, Phenoxyethanol, Methylparaben, Ethylparaben, Propylparaben, Butylparaben, Isobutylparaben, Parfum, Diethylene Glycol, Butoxyethanol;
"ebelin": Butyrolactone, 1-Methoxy- 2-Propanol, Water, Parfüm

Die Wettbewerbsprodukte weisen keine Folienlage auf.

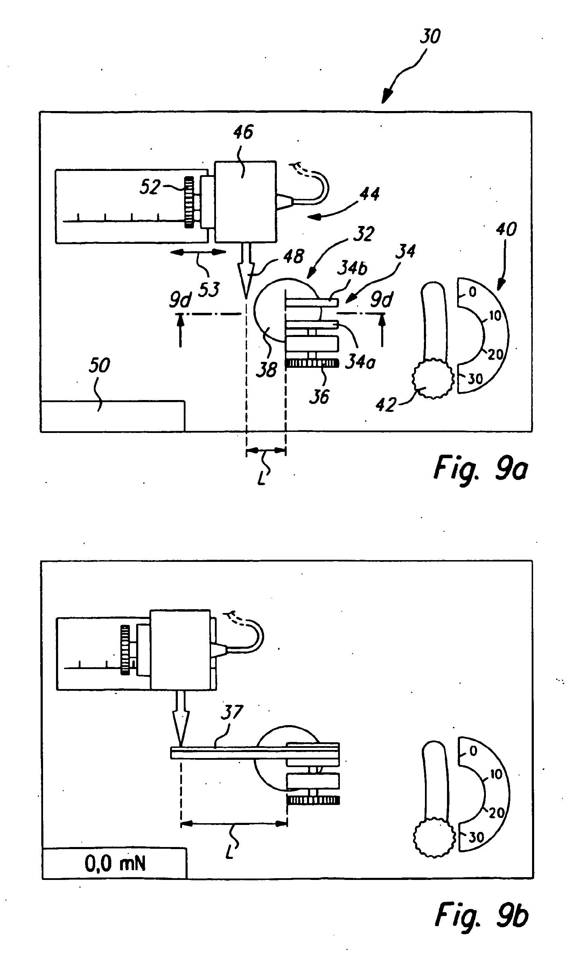

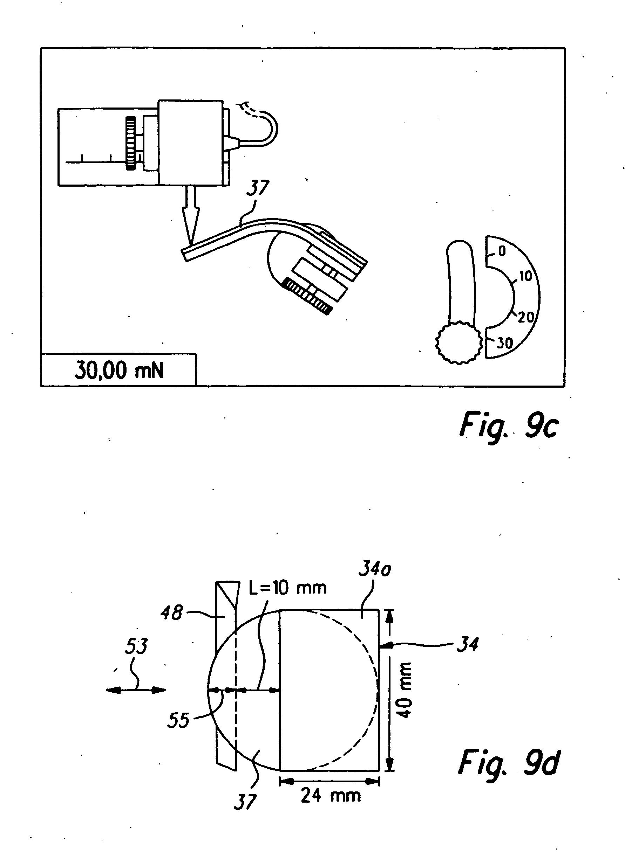

Es wurde mit einem Biegewinkel von 30° und einer Biegelänge von 10 mm gearbeitet. Der Überhang für die Platzierung des Messfühlers beträgt 6 mm innerhalb des Randbereichs des Probenkörpers 37 (siehe Figur 9b). Für die Messung war zudem eine Drehwinkelgeschwindigkeit von 6 °/ sec. eingestellt. Als Probenkörper wurde ein kreisrunder Probenkörper mit einem Durchmesser von 40 mm definiert. Bei Faserverbundartikeln mit größerer Dimension bzw. den Wettbewerbsprodukten mit größerer Dimension wurde der entsprechend definierte Probenkörper ausgestanzt.

Das für die Biegesteifigkeitsmessung eingesetzte Gerät 30 ist in Figuren 9a-d schematisch dargestellt. Das Gerät 30 umfasst dabei einen Probenhalter 32 mit einer Einspannklemme 34 und einer Rändelschraube 36, die ein Zusammentreffen der beiden Einspannplatten 34a und 34b zur Befestigung des Probenkörpers 37 ermöglicht. Die Einspannklemme 34 ist dabei auf einer scheibenförmigen Platte 38 angebracht, wobei diese Platte 38 durch geräteeinterne Funktionssteuerung bei der Durchführung der Messung eine Drehung im Uhrzeigersinn gemäß des eingegebenen Biegewinkels (hier 30°) durchführt. Die Drehwinkelgeschwindigkeit der Platte 38 beträgt 6 °/sec. Die Wahl des Biegewinkels kann dabei an einem weiteren Vorrichtungsbereich 40 festgelegt und mittels einer Rändelschraube 42 justiert werden. Die eigentliche Messvorrichtung 44 umfasst eine Messzelle 46. Hierin werden die durch einen Messfühler 48 aufgenommenen Kräfte in einen Kraftmesswert umgewandelt und letztlich als Messwert auf einem Display 50 angezeigt. Der Messfühler 48 ist bei diesem Gerät in Form einer vertikal stehenden Schneide ausgeführt. Die schon erwähnte Biegelänge L (also die Länge des Kraftarms) ist dabei durch Justierung der Messvorrichtung 44 über eine Rändelschraube 52 in Richtung des Pfeils 53 einstellbar. Die Biegelänge L ist dabei zu verstehen als die Länge des Bereichs, der sich zwischen Messfühler und nächstliegender Kante der Einspannklemme 34 befindet und den Kraftarm bildet; die Biegelänge L ist 10 mm.
Für die Versuchsdurchführung wird der runde Probenkörper 37 (siehe Fig. 9d) am Randbereich tangential mit dem äußeren Rand der Einspannplatten 34a,b der Einspannklemme 34 abschließend im Probenhalter 32 fixiert. Die Einspannklemme 34 und ihre Einspannplatten 34a,b weisen hierbei eine Breite von 2,4 cm und eine Länge von 4,0 cm auf. Der Probenkörper 37 ist dabei mit der von der Folienlage gebildeten Oberseite in Richtung des Messfühlers eingespannt.
Vor Versuchsbeginn wird außerdem die Schneide des Messfühlers bis zur Berührung der Probe an den anderen Endbereich der Probe herangeführt und justiert, so dass die Probe die Schneide des Messfühlers gerade berührt. Ein Überhang 55 des Probenkörpers 37 über die Schneide des Messfühlers beträgt ca. 6 mm (siehe Fig.9d). Bei Durchführung der Messung dreht sich die Platte 38 mit der Einspannklemme 34 im Uhrzeigersinn bis zu dem angegebenen Biegewinkel, was dann zu einer Verformung des Probenkörpers, also des Faserverbundartikels führt. Der Probenkörper wird gegen die Messzelle gebogen. Die durch die Verformung verursachten Kräfte werden in ablesbare Messdaten umgewandelt und an dem Display 50 angezeigt. Das Ergebnis einer beispielhaften Messung ist in der nachfolgenden Tabelle III dargestellt. Man erkennt, dass die Kraft, die benötigt wird, um einen Faserverbundartikel mit einer Folienlage zu verformen, viel größer ist als bei den vermessenen Wettbewerbsprodukten, die keine Folienlage aufweisen. Dies bedeutet, dass die erfindungsgemäßen Faserverbundartikel eine höhere Rückstellkraft und Eigenstabilität haben.

**Tabelle III**

| Messung | Biegesteifigkeit essence | Biegesteifigkeit wimex | Biegesteifigkeit cadea | Biegesteifigkeit ebelin | Biegesteifigkeit Faserverbundartikel |
|---|---|---|---|---|---|
| Nr. | [mN] | [mN] | [mN] | [mN] | [mN] |
| 1 | 6 | 5 | 4 | 5 | 41 |
| 2 | 7 | 5 | 3 | 4 | 29 |
| 3 | 9 | 4 | 3 | 2 | 32 |
| 4 | 9 | 4 | 3 | 9 | 39 |
| 5 | 10 | 4 | 4 | 7 | 28 |
| 6 | 8 | 4 | 3 | 8 | 35 |
| 7 | 9 | 4 | 3 | 7 | 27 |
| 8 | 7 | 5 | 7 | 8 | 35 |
| 9 | 8 | 5 | 6 | 3 | 43 |
| 10 | 7 | 5 | 5 | 9 | 33 |
| 11 | 5 | 3 | 6 | 8 | 36 |
| 12 | 8 | 3 | 6 | 3 | 30 |
| 13 | 9 | 3 | 6 | 3 | 30 |
| 14 | 6 | 4 | 5 | 3 | 43 |
| 15 | 5 | 4 | 6 | 5 | 39 |
| 16 | 8 | 3 | 6 | 2 | 34 |
| 17 | 6 | 5 | 5 | 2 | 37 |
| 18 | 5 | 5 | 4 | 4 | 48 |
| 19 | 8 | 5 | 5 | 2 | 32 |
| 20 | 6 | 5 | 4 | 1 | 37 |
| **Mittelwert** | **7,30** | **4,25** | **4,70** | **4,75** | **35,40** |
| **s** | **1,53** | **0,79** | **1,30** | **2,67** | **5,59** |
| **Min** | **5,00** | **3,00** | **3,00** | **1,00** | **27,00** |
| **Max** | **10,00** | **5,00** | **7,00** | **9,00** | **48,00** |

| | | | | | |
|---|---|---|---|---|---|
| S= Standardabweichung | | | | | |

Sämtliche vorausgehend getesteten Faserverbundartikel umfassen eine Faservlieslage der folgenden Zusammensetzung: 60 Gew.-% Baumwollfasern, 15 Gew.-% Bikomponentenfasern, 25 Gew.-% Mikrostapelfasern. Das Flächengewicht der Faservlieslage kann vorzugweise zwischen 120 bis 200 g/m² betragen; es liegt bei den konkret gemessenen Proben bei 150g/m². Die Folienlage ist gebildet aus PP, PE, LDPE, möglicherweise mit Zusätzen von Titandioxid und Metallocene auf PE- bzw. LDPE-Basis. Die Dicke der Folie beträgt zwischen 10 und 30 µm. Ihr Flächengewicht beträgt zwischen 10 und 40 g/m², bei den konkret gemessenen Proben liegt es bei 14 g/m². Eine haftvermittelnde Lage aus Heißschmelzkleber zwischen der Faservlieslage und der Folienlage weist ein Flächengewicht von ca.4 g/m² auf. Der Faserverbundartikel, der den Messungen zugrundegelegt wurde, hat also ein Flächengewicht von 168 g/m².

### Bestimmung der Dicke von Faserverbundartikeln:

Wenn im Zuge der vorliegenden Erfindung von Dicken des Faserverbundartikels oder einer Vlieslage die Rede ist, so werden diese unter Anwendung eines spezifischen Messdrucks von 0,5 kPa auf einer Tasterfläche von 25 cm² ermittelt. Insbesondere kann ein Dickenmessgerät DMT der Firma Schröder verwendet werden. Im Übrigen wird die Dicke in Anlehnung an DIN EN ISO 9073-2 bestimmt.

## Patentansprüche

1. Anordnung (2) einer Mehrzahl befeuchteter scheiben- bzw. padförmiger Faserverbundartikel (4) in einem Verpackungsbehältnis (6) mit einer Öffnung (12) zur Abgabe der Faserverbundartikel (4) an den Endverbraucher, wobei die Faserverbundartikel (4) eine eine erste durchgehende Oberseite (20) des Faserverbundartikels (4) bildende Faservlieslage (16) und eine eine zweite Oberseite (22) des Faserverbundartikels (4) bildende flüssigkeitsundurchlässige Folienlage (18) aufweisen und wobei die Faserverbundartikel (4) mit einer die Faservlieslage (16) gleichmäßig befeuchtenden Tränkflüssigkeit beaufschlagt sind, wobei die Tränkflüssigkeit mindestens eine Komponente eines nicht-wässrigen Lösungsmittels enthält, und wobei die Faserverbundartikel (4) in dem Verpackungsbehältnis (6) dieselbe Orientierung aufweisen, derart, dass jeweils ihre erste Oberseite (20) oder jeweils ihre zweite Oberseite (22) der Öffnung (12) des Verpackungsbehältnisses (6) zugewandt ist, **dadurch gekennzeichnet, dass** die flüssigkeitsundurchlässige Folienlage (18) eine durchgehende Oberseite (20) des jeweiligen Faserverbundartikels (4) bildet und dass die Folienlage (18) eine Dicke zwischen 10 - 30 µm aufweist und dass die Faserverbundartikel (4) jeweils eine Biegesteifigkeit von mindestens 10 mN und von höchstens 60 mN, gemessen nach dem beschriebenen Test, aufweisen.

2. Anordnung nach Anspruch 1, **dadurch gekennzeichnet, dass** die zweite Oberseite (22) des Faserverbundartikels (4) der Öffnung des Verpackungsbehältnisses zugewandt ist.

3. Anordnung nach Anspruch 1 oder 2, **dadurch gekennzeichnet, dass** die Komponente des nicht-wässrigen Lösungsmittels ein flüchtiges Lösungsmittel ist.

4. Anordnung nach einem oder mehreren der vorstehenden Ansprüche, **dadurch gekennzeichnet, dass** die Komponente des nicht-wässrigen Lösungsmittels entnommen ist aus der Gruppe enthaltend mittel flüchtige oder leicht flüchtige Lösungsmittel oder Kombinationen davon.

5. Anordnung nach einem oder mehreren der vorstehenden Ansprüche, **dadurch gekennzeichnet, dass** die Komponente des nicht-wässrigen Lösungsmittels entnommen ist aus der Gruppe enthaltend Aceton, Ethylacetat, Butylacetat, Butyrolacton, Methylacetat, Ethanol, Isopropanol, Ethyllactat, 1-Methoxy-2-Propanol und Methylethylketon oder Kombinationen.

6. Anordnung nach einem oder mehreren der vorstehenden Ansprüche, **dadurch gekennzeichnet, dass** der Anteil des nicht-wässrigen Lösungsmittels 20 - 90 Gew.-% bezogen auf das Gesamtgewicht der Tränkflüssigkeit beträgt.

7. Anordnung nach einem oder mehreren der vorstehenden Ansprüche, **dadurch gekennzeichnet, dass** die Faserverbundartikel (4) im Mittel einen Feuchtegehalt von wenigstens 200 Gew.-% und von höchstens 750 Gew.-%, insbesondere von wenigstens 250 Gew.-% und von höchstens 700 Gew.-%, weiter insbesondere von wenigstens 300 Gew.-% und höchstens 650 Gew.-%, weiter insbesondere von wenigstens 350 Gew.-% und höchstens 600 Gew.-% aufweisen.

8. Anordnung nach einem der mehreren der vorstehenden Ansprüche, **dadurch gekennzeichnet, dass** die Folienlage (18) ein Flächengewicht von 10 - 40 g/m² aufweist.

9. Anordnung nach einem oder mehreren der vorstehenden Ansprüche, **dadurch gekennzeichnet, dass** die Folienlage (18) Polymere der Gruppe enthaltend PE (Polyethylen), LDPE (low density Polyethylen), LLDPE (linear low density Polyethylen), MDPE (medium density Polyethylen), HDPE (high density Polyethylen) PP (Polypropylen),Metallocen-katalysierte Polymere, insbesondere Metallocen-katalysiertes LLPE/LLDPE, Metallocen-katalysiertes LLDPE, Metallocen-katalysiertes PP, Metallocen-katalysiertes PE und deren Mischungen, Titanoxid-haltige Polymere, Farbstoff- oder Pigmenthaltige Polymere oder Kombinationen hiervon umfasst.

10. Anordnung nach einem oder mehreren der vorstehenden Ansprüche, **dadurch gekennzeichnet, dass** die Faservlieslage (16) ein Flächengewicht von 40 - 350 g/m², insbesondere von 60 - 250 g/m² und weiter insbesondere von 100 - 200 g/m² aufweist.

11. Anordnung nach einem oder mehreren der vorstehenden Ansprüche, **dadurch gekennzeichnet, dass** die Faservlieslage (16) eine Dicke von 0,2 bis 6,0 mm, insbesondere von 0,6 - 5,0 mm, insbesondere von 1,0 - 3,5 mm, insbesondere von 1,2 - 2,5 mm, gemessen im trockenen Zustand, und eine Dicke von 0,2 bis 4,5 mm, insbesondere von 0,6 bis 3,5 mm, insbesondere von 1,0 - 2,5 mm, gemessen im getränkten Zustand, aufweist.

12. Anordnung nach einem oder mehreren der vorstehenden Ansprüche, **dadurch gekennzeichnet, dass** die Faservlieslage (16) Stapelfasern einer Länge von 3 - 60 mm, insbesondere von 15 - 40 mm, insbesondere von 15 -25 mm umfasst.

13. Anordnung nach Anspruch 12, **dadurch gekennzeichnet, dass** die Stapelfasern synthetische Mikrostapelfasern umfassen.

14. Anordnung nach Anspruch 13, **dadurch gekennzeichnet, dass** die synthetischen Mikrostapelfasern Polyester (PES)- Fasern oder Viskosefasern sind.

15. Anordnung nach Anspruch 12, 13 oder 14, **dadurch gekennzeichnet, dass** der Anteil der Mikrostapelfasern 15 - 85 Gew.-%, insbesondere 15 - 65 Gew.-% und weiter insbesondere 20 - 30 Gew.-% der Masse der Faservlieslage beträgt.

16. Anordnung nach einem oder mehreren der vorstehenden Ansprüche, **dadurch gekennzeichnet, dass** in der Faservlieslage (16) zusätzlich bis 72 Gew.-%, insbesondere 15 - 65 Gew.-% und weiter insbesondere 50 - 65 Gew.-% Baumwollfasern enthalten sind.

17. Anordnung nach einem oder mehreren der vorstehenden Ansprüche, **dadurch gekennzeichnet, dass** in der Faservlieslage (16) zusätzlich wärmeschmelzbare Bindefasern als Stapelfasern enthalten sind, insbesondere in einem gewichtsprozentualen Anteil von 10 - 20 Gew.-%, insbesondere 10 - 18 Gew.-% und weiter insbesondere 10 - 15 Gew.-%.

18. Anordnung nach Anspruch 17, **dadurch gekennzeichnet, dass** die Bindefasern Mehrkomponentenfasern, insbesondere Bikomponenten-Fasern sind.

19. Anordnung nach einem oder mehreren der vorstehenden Ansprüche, **dadurch gekennzeichnet, dass** die Faservlieslage (16) zu 20 - 30 Gew.-% Mikrostapelfasern, zu 9 - 17 Gew.-% Bindefasern und zu 58 - 66 Gew.-% Baumwollfasern umfasst.

20. Anordnung nach einem oder mehreren der vorstehenden Ansprüche, **dadurch gekennzeichnet, dass** die erste Oberseite (20) der Faserverbundartikel (4) strukturiert ist.

21. Anordnung nach einem oder mehreren der vorstehenden Ansprüche, **dadurch gekennzeichnet, dass** die Faservlieslage (16) und die Folienlage (18) unmittelbar miteinander verbunden sind.

22. Anordnung nach Anspruch 21, **dadurch gekennzeichnet, dass** die Faservlieslage (16) und die Folienlage (18) adhäsiv, vorzugsweise mittels Heißschmelzkleber verbunden sind.

23. Anordnung nach einem oder mehreren der vorstehenden Ansprüche, **dadurch gekennzeichnet, dass** die erste Oberseite (20) eines Faserverbundartikels (4) (Faservlieslage) zur zweiten Oberseite (22) eines anderen Faserverbundartikels (4) (Folienlage) eine Gleitreibungszahl µ_{D} von < 1, vorzugsweise von < 0,8, gemessen nach der beschriebenen Methode aufweist.

24. Anordnung nach einem oder mehreren der vorstehenden Ansprüche, **dadurch gekennzeichnet, dass** die Faserverbundartikel (4) eine Biegesteifigkeit von mindestens 15 mN und von höchstens 55 mN, weiter vorzugsweise von mindestens 20 mN und von höchstens 50 mN aufweisen.

25. Anordnung nach einem oder mehreren der vorstehenden Ansprüche, **dadurch gekennzeichnet, dass** die Faserverbundartikel (4) kreisrund sind und einen Durchmesser von 40 - 85 mm, insbesondere 55 - 80 mm, weiter insbesondere von 57 - 70 mm aufweisen.

26. Anordnung nach einem oder mehreren der vorstehenden Ansprüche, **dadurch gekennzeichnet, dass** die Faserverbundartikel oval sind und eine Längserstreckung von 60 - 100 mm, insbesondere von 70 - 90 mm, weiter insbesondere von 75 - 85 mm und eine Quererstreckung von 40 - 80 mm, insbesondere 50 - 70 mm, weiter insbesondere von 55 - 65 mm aufweisen.

27. Anordnung nach einem oder mehreren der vorstehenden Ansprüche, **dadurch gekennzeichnet, dass** das Verpackungsbehältnis (6) starr oder halbstarr ausgebildet ist.

28. Anordnung nach einem oder mehreren der vorstehenden Ansprüche, **dadurch gekennzeichnet, dass** die Öffnung (12) des Verpackungsbehältnisses (6) im Wesentlichen eine gesamte Sichtseite des Verpackungsbehältnisses (6) erfasst.

29. Anordnung nach einem oder mehreren der vorstehenden Ansprüche, **dadurch gekennzeichnet, dass** das Verpackungsbehältnis (6) topfförmig ausgebildet ist.

30. Anordnung nach einem oder mehreren der vorstehenden Ansprüche, **dadurch gekennzeichnet, dass** die Faserverbundartikel (4) spielfrei zu einer Innenwand des Verpackungsbehältnisses (6) angeordnet sind, so dass ein Abstand zwischen den Faserverbundartikeln und der Innenwand in Umfangsrichtung durchgehend < 6 mm, insbesondere < 5 mm, weiter insbesondere < 4 mm, weiter insbesondere < 3 mm ist.

31. Anordnung nach einem oder mehreren der vorstehenden Ansprüche, **dadurch gekennzeichnet, dass** als Verpackungsbehältnis (6) ein Schraubverschlussgefäß umfassend Materialien entnommen aus der Gruppe von Polymeren, insbesondere PE, PP, Polystryol, Styrol-Acryl-Copolymer, oder Glas oder Kombinationen hiervon eingesetzt wird.

32. Anordnung nach einem oder mehreren der vorstehenden Ansprüche, **dadurch gekennzeichnet, dass** sie wenigstens 10 Faserverbundartikel und höchstens 60 Faserverbundartikel, insbesondere höchstens 54 Faserverbundartikel und weiter insbesondere höchstens 40 Faserverbundartikel umfasst.

33. Anordnung nach einem oder mehreren der vorstehenden Ansprüche, **dadurch gekennzeichnet, dass** die Tränkflüssigkeit Zusatzstoffe aus einer oder mehreren der Gruppen der Pflanzenextrakte, Öle, insbesondere Pflanzenöle, Vitamine, Vitaminderivate, Duftstoffe, Parfüme, Rückfetter, pflegende Komponenten, Emollentien, Verdickungsmittel, Viskose erhöhende Stoffe, Tenside oder Farbstoffe enthält.

## Claims

1. An arrangement (2) of a plurality of moistened disc-like or pad-like composite fibre articles (4) in a packaging container (6) with an opening (12) for the supply of the composite fibre articles (4) to the final consumer, wherein the composite fibre articles (4) provide a fibre fleece layer (16) forming a first continuous surface (20) of the composite fibre article (4) and a liquid-impermeable foil layer (18) forming a second surface (22) of the composite fibre article (4), and wherein the composite fibre articles (4) are charged with an impregnating liquid uniformly moistening the fibre fleece layer (16), wherein the impregnating liquid contains at least one component of a non-aqueous solvent, and wherein the composite fibre articles (4) in the packaging container (6) provide the same orientation, such that, in each case, their first surface (20) or respectively their second surface (22) is facing towards the opening (12) of the packaging container (6), **characterised in that** the liquid-impermeable foil layer (18) forms a continuous surface (20) of the respective composite fibre article (4) and that the foil layer (18) provides a thickness between 10-30 µm and that the composite fibre articles (4) each provide a bending strength of at least 10 mN and of at most 60 mN, measured according to the test described.

2. The arrangement according to claim 1, **characterised in that** the second surface (22) of the composite fibre article (4) faces towards the opening of the packaging container.

3. The arrangement according to claim 1 or 2, **characterised in that** the component of the non-aqueous solvent is a volatile solvent.

4. The arrangement according to any one or more of the preceding claims, **characterised in that** the component of the non-aqueous solvent is taken from the group containing moderately volatile or highly volatile solvents or combinations thereof.

5. The arrangement according to any one or more of the preceding claims, **characterised in that** the component of the non-aqueous solvent is taken from the group containing acetone, ethyl acetate, butyl acetate, butyrolactone, methyl acetate, ethanol, isopropanol, ethyl lactate, 1-methoxy-2-propanol and methylethyl ketone or combinations.

6. The arrangement according to any one or more of the preceding claims, **characterised in that** the proportion of the non-aqueous solvent is 20-90% by weight relative to the total weight of the impregnating liquid.

7. The arrangement according to any one or more of the preceding claims, **characterised in that** the composite fibre articles (4) provide an average moisture content of at least 200% by weight and of at most 750% by weight, in particular of at least 250% by weight and of at most 700% by weight, further in particular, of at least 300% by weight and at most 650% by weight, further in particular, of at least 350% by weight and at most 600% by weight.

8. The arrangement according to any one or more of the preceding claims, **characterised in that** the foil layer (18) provides a weight by area of 10-40 g/m².

9. The arrangement according to any one or more of the preceding claims, **characterised in that** the foil layer (18) comprises polymers of the group containing PE (polyethylene), LDPE (low density polyethylene), LLDPE (linear low density polyethylene), MDPE (medium density polyethylene), HDPE (high density polyethylene), PP (polypropylene), metallocene-catalysed polymers, in particular metallocene-catalysed LLPE/LLDPE, metallocene-catalysed LLDPE, metallocene-catalysed PP, metallocene-catalysed PE and their mixtures, titanium-oxide-containing polymers, colouring or pigment containing polymers or combinations thereof.

10. The arrangement according to any one or more of the preceding claims, **characterised in that** the fibre fleece layer (16) provides an area by weight of 40-350 g/m², in particular of 60-250 g/m² and, further in particular of 100-200 g/m².

11. The arrangement according to any one or more of the preceding claims, **characterised in that** the fibre fleece layer (16) provides a thickness from 0,2 to 6,0 mm, in particular of 0,6 - 5,0 mm, in particular of 1,0 - 3,5 mm, in particular of 1,2 - 2,5 mm, measured in the dry condition, and a thickness of 0,2 to 4,5 mm, in particular of 0,6 to 3,5 mm, in particular of 1,0 - 2,5 mm, measured in the impregnated condition.

12. The arrangement according to any one or more of the preceding claims, **characterised in that** the fleece layer (16) comprises staple fibres of a length of 3 - 60 mm, in particular of 15 - 40 mm, in particular of 15 - 25 mm.

13. The arrangement according to claim 12, **characterised in that** the staple fibres comprise synthetic micro-staple fibres.

14. The arrangement according to claim 13, **characterised in that** the synthetic micro-staple fibres are polyester (PES) fibres or viscose fibres.

15. The arrangement according to claim 12, 13 or 14, **characterised in that** the proportion of the micro-staple fibres is 15 - 85% by weight, in particular 15 - 65% by weight and further in particular 20 - 30% by weight of the mass of the fibre fleece layer.

16. The arrangement according to any one or more of the preceding claims, **characterised in that** up to 72% by weight, in particular 15 - 65% by weight and further in particular 50 - 65% by weight cotton fibres are additionally contained in the fibre fleece layer (16).

17. The arrangement according to any one or more of the preceding claims, **characterised in that** hot-melting bonding fibres are additionally contained in the fibre fleece layer (16) as staple fibres, in particular in a percentage proportion by weight from 10 - 20% by weight, in particular 10 - 18% by weight and further in particular 10 - 15% by weight.

18. The arrangement according to claim 17, **characterised in that** the bonding fibres are multi-component fibres, in particular bi-component fibres.

19. The arrangement according to any one or more of the preceding claims, **characterised in that** the fibre fleece layer (16) comprises 20 - 30% by weight micro-staple fibres, 9 - 17% by weight binding fibres and 58 - 66% by weight cotton fibres.

20. The arrangement according to any one or more of the preceding claims, **characterised in that** the first surface (20) of the composite fibre articles (4) is structured.

21. The arrangement according to any one or more of the preceding claims, **characterised in that** the fibre fleece layer (16) and the foil layer (18) are directly connected to one another.

22. The arrangement according to claim 21, **characterised in that** the fibre fleece layer (16) and the foil layer (18) are connected adhesively, preferably by means of hot-melt adhesive.

23. The arrangement according to any one or more of the preceding claims, **characterised in that** the first surface (20) of one composite fibre article (4) (fibre fleece layer) provides relative to the second surface (22) of another composite fibre article (4) (foil layer) a coefficient of sliding friction µ_{D} of <1, preferably of <0,8, measured according to the method described.

24. The arrangement according to any one or more of the preceding claims, **characterised in that** the composite fibre articles (4) provide a bending strength of at least 15 mN and of at most 55 mN, further preferably at least 20 mN and at most 50 mN.

25. The arrangement according to any one or more of the preceding claims, **characterised in that** the composite fibre articles (4) are circular and provide a diameter of 40 - 85 mm, in particular 55 - 80 mm, further in particular 57-70 mm.

26. The arrangement according to any one or more of the preceding claims, **characterised in that** the composite fibre articles are oval and provide a longitudinal extension of 60 - 100 mm, in particular 70 - 90 mm, further in particular 75 - 85 mm, and a transverse extension of 40 - 80 mm, in particular 50 - 70 mm, further in particular of 55 - 65 mm.

27. The arrangement according to any one or more of the preceding claims, **characterised in that** the packaging container (6) is designed to be rigid or semi-rigid.

28. The arrangement according to any one or more of the preceding claims, **characterised in that** the opening (12) of the packaging container (6) substantially covers an entire visible side of the packaging container (6).

29. The arrangement according to any one or more of the preceding claims, **characterised in that** the packaging container (6) is designed in the shape of a pot.

30. The arrangement according to any one or more of the preceding claims, **characterised in that** the fibre-composite articles (4) are arranged without play relative to an internal wall of the packaging container (6), so that a spacing distance between the fibre-composite articles and the internal wall in the circumferential direction is continuously <6 mm, in particular <5 mm, further in particular <4 mm, further in particular <3 mm.

31. The arrangement according to any one or more of the preceding claims, **characterised in that** a screw-top container comprising materials taken from the group of polymers, in particular PE, PP, polystyrene, acrylstyrene-copolymer or glass or combinations thereof is used as the packaging container (6).

32. The arrangement according to any one or more of the preceding claims, **characterised in that** it comprises at least 10 composite fibre articles and at most 60 composite fibre articles, in particular at most 54 composite fibre articles and further in particular at most 40 composite fibre articles.

33. The arrangement according to any one or more of the preceding claims, **characterised in that** the impregnating liquid contains additives from one or more of the groups of plant extracts, oils, in particular plant oils, vitamins, vitamin derivatives, fragrances, perfumes, refatting agents, care components, emollients, thickening agents, viscose increasing substances, detergents or colourings.

## Revendications

1. Agencement (2) d'une pluralité d'articles non tissés (4) sous forme de rondelles ou de disques dans un récipient d'emballage (6) comprenant une ouverture (12) pour la distribution des articles non tissés (4) à l'utilisateur, les articles non tissés (4) présentant une couche de non-tissé (16) formant une première face continue (20) de l'article non tissé (4) et une couche de feuille imperméable au liquide (18) formant une deuxième face (22) de l'article non tissé (4), les articles non tissés (4) étant imbibés d'un liquide humidifiant de façon uniforme la couche de non-tissé (16), le liquide contenant au moins un composant d'un solvant non aqueux, et les articles non tissés (4) étant tous orientés de la même façon dans le récipient d'emballage (6) de telle sorte que leur première face (20) ou leur deuxième face (22) soit orientée vers l'ouverture (12) du récipient d'emballage (6), **caractérisé en ce que** la couche imperméable au liquide (18) forme une face continue (22) de l'article non tissé (4) et **en ce que** la couche (18) présente une épaisseur comprise entre 10 et 30 µm et **en ce que** les articles non tissés (4) présentent une résistance à la flexion d'au moins 10 mN et au plus de 60 mN, mesurée suivant le test décrit.

2. Agencement selon la revendication 1, **caractérisé en ce que** la deuxième face (22) de l'article non tissé (4) est orientée vers l'ouverture du récipient d'emballage.

3. Agencement selon la revendication 1 ou 2, **caractérisé en ce que** le composant du solvant non aqueux est un solvant volatil.

4. Agencement selon une ou plusieurs des revendications précédentes, **caractérisé en ce que** le composant du solvant non aqueux est choisi à partir du groupe contenant des solvants moyennement ou légèrement volatils, ou des combinaisons de ceux-ci.

5. Agencement selon une ou plusieurs des revendications précédentes, **caractérisé en ce que** le composant du solvant non aqueux est choisi parmi le groupe constitué de l'acétone, acétate d'éthyle, acétate de butyle, butyrolactone, acétate de méthyle, éthanol, isopropanol, lactate d'éthyle, 1-méthoxy-2-propanol et méthyléthylcétone ou des combinaisons de ceux-ci.

6. Agencement selon une ou plusieurs des revendications précédentes, **caractérisé en ce que** la part du solvant non aqueux représente de 20 à 90 % en poids du poids total du liquide.

7. Agencement selon une ou plusieurs des revendications précédentes, **caractérisé en ce que** les articles non tissés (4) présentent en moyenne une teneur en humidité d'au moins 200 % en poids et au plus de 750 % en poids, plus particulièrement d'au moins 250 % en poids et au plus de 700 % en poids, plus particulièrement d'au moins 300 % en poids et au plus de 650 % en poids, plus particulièrement d'au moins 350 % en poids et au plus de 600 % en poids.

8. Agencement selon une ou plusieurs des revendications précédentes, **caractérisé en ce que** la couche (18) présente un poids par unité de surface de 10 à 40 g/m².

9. Agencement selon une ou plusieurs des revendications précédentes, **caractérisé en ce que** la couche (18) comprend des polymères du groupe contenant le PE (polyéthylène), LDPE (polyéthylène basse densité), LLDPE (polyéthylène basse densité linéaire), MDPE (polyéthylène moyenne densité), HDPE (polyéthylène haute densité), PP (polypropylène), des polymères obtenus par catalyse métallocène, en particulier LLPE/LLDPE obtenu par catalyse métallocène, LLDPE obtenu par catalyse métallocène, PP obtenu par catalyse métallocène, PE obtenu par catalyse métallocène et leurs mélanges, des polymères contenant de l'oxyde de titane, des polymères contenant des colorants ou des pigments ou des combinaisons de ceux-ci.

10. Agencement selon une ou plusieurs des revendications précédentes, **caractérisé en ce que** la couche de non-tissé (16) présente un poids par unité de surface allant de 40 à 350 g/m², en particulier de 60 à 250 g/m² et plus particulièrement de 100 à 200 g/m².

11. Agencement selon une ou plusieurs des revendications précédentes, **caractérisé en ce que** la couche de non-tissé (16) présente une épaisseur allant de 0,2 à 6,0 mm, en particulier de 0,6 à 5,0 mm, en particulier de 1,0 à 3,5 mm, en particulier de 1,2 à 2,5 mm, mesurée à l'état sec, et une épaisseur allant de 0,2 à 4,5 mm, en particulier de 0,6 à 3,5 mm, en particulier de 1,0 à 2,5 mm, mesurée à l'état mouillé.

12. Agencement selon une ou plusieurs des revendications précédentes, **caractérisé en ce que** la couche de non-tissé (16) comprend des fibres discontinues d'une longueur comprise entre 3 et 60 mm, en particulier entre 15 et 40 mm, en particulier entre 15 et 25 mm.

13. Agencement selon la revendication 12, **caractérisé en ce que** les fibres discontinues comprennent des microfibres discontinues synthétiques.

14. Agencement selon la revendication 13, **caractérisé en ce que** les microfibres discontinues synthétiques sont des fibres de polyester (PES) ou des fibres de viscose.

15. Agencement selon la revendication 12, 13 ou 14, **caractérisé en ce que** la part des microfibres est de 15 à 85 % en poids, en particulier de 15 à 65 % en poids, en particulier de 20 à 30 % en poids de la masse de la couche de non-tissé.

16. Agencement selon une ou plusieurs des revendications précédentes, **caractérisé en ce que** la couche de non-tissé (16) contient en plus jusqu'à 72 % en poids, en particulier de 15 à 65 % en poids, et en particulier de 50 à 65 % en poids de fibres de coton.

17. Agencement selon une ou plusieurs des revendications précédentes, **caractérisé en ce que** la couche de non-tissé (16) contient en plus des fibres de liaison thermofusibles comme fibres artificielles discontinues, en particulier dans une proportion allant de 10 à 20 % en poids, en particulier de 10 à 18 % en poids, en particulier de 10 à 15 % en poids.

18. Agencement selon la revendication 17, **caractérisé en ce que** les fibres de liaison sont des fibres à plusieurs composants, en particulier à deux composants.

19. Agencement selon une ou plusieurs des revendications précédentes, **caractérisé en ce que** la couche de non-tissé (16) comprend de 20 à 30 % en poids de microfibres discontinues, de 9 à 17 % en poids de fibres de liaison et de 58 à 66 % en poids de fibres de coton.

20. Agencement selon une ou plusieurs des revendications précédentes, **caractérisé en ce que** la première face (20) des articles non tissés (4) est structurée.

21. Agencement selon une ou plusieurs des revendications précédentes, **caractérisé en ce que** la couche de non-tissé (16) et la couche en feuille (18) sont reliées entre elles.

22. Agencement selon la revendication 21, **caractérisé en ce que** la couche de non-tissé (16) et la couche en feuille (18) sont reliées de façon adhésive, de préférence au moyen d'une colle thermofusible.

23. Agencement selon une ou plusieurs des revendications précédentes, **caractérisé en ce que** la première face (20) d'un article non tissé (4) (couche de non-tissé) présente par rapport à la deuxième face (22) d'un autre article non tissé (4) (couche en feuille) un coefficient de frottement de glissement µ_{D} < 1, de préférence < 0,8, mesuré suivant la méthode décrite.

24. Agencement selon une ou plusieurs des revendications précédentes, **caractérisé en ce que** les articles non tissés (4) présentent une résistance à la flexion d'au moins 15 mN et au plus de 55 mN, de préférence d'au moins 20 mN et au plus de 50 mN.

25. Agencement selon une ou plusieurs des revendications précédentes, **caractérisé en ce que** les articles non tissés (4) sont en forme de cercle et présentent un diamètre compris entre 40 et 85 mm, en particulier entre 55 et 80 mm, en particulier entre 57 et 70 mm.

26. Agencement selon une ou plusieurs des revendications précédentes, **caractérisé en ce que** les articles non tissés sont ovales et **en ce qu'**ils présentent une longueur comprise entre 60 et 100 mm, en particulier entre 70 et 90 mm, en particulier entre 75 et 85 mm, et une largeur comprise entre 40 et 80 mm, en particulier entre 50 et 70 mm, en particulier entre 55 et 65 mm.

27. Agencement selon une ou plusieurs des revendications précédentes, **caractérisé en ce que** le récipient d'emballage (6) est réalisé rigide ou semi-rigide.

28. Agencement selon une ou plusieurs des revendications précédentes, **caractérisé en ce que** l'ouverture (12) du récipient d'emballage (6) détermine pour l'essentiel l'ensemble du côté visible du récipient d'emballage (6).

29. Agencement selon une ou plusieurs des revendications précédentes, **caractérisé en ce que** le récipient d'emballage (6) est réalisé en forme de pot.

30. Agencement selon une ou plusieurs des revendications précédentes, **caractérisé en ce que** les articles non tissés (4) sont agencés sans jeu au niveau d'une paroi intérieure du récipient d'emballage (6) de telle façon que la distance entre les articles non tissés et la paroi intérieure est, dans le sens de la circonférence, < 6 mm, en particulier < 5 mm, en particulier < 4 mm, en particulier < 3 mm.

31. Agencement selon une ou plusieurs des revendications précédentes, **caractérisé en ce qu'**il est utilisé comme récipient d'emballage (6) un récipient à couvercle fileté comprenant des matériaux sélectionnés à partir du groupe contenant des polymères, en particulier PE, PP, polystryol, copolymère styrol-acrylique, ou du verre, ou des combinaisons de ceux-ci.

32. Agencement selon une ou plusieurs des revendications précédentes, **caractérisé en ce qu'**il contient au moins 10 articles non tissés et au plus 60 articles non tissés, en particulier au plus 54 articles non tissés, plus particulièrement au plus 40 articles non tissés.

33. Agencement selon une ou plusieurs des revendications précédentes, **caractérisé en ce que** le liquide contient des additifs provenant d'un ou plusieurs groupes d'extraits végétaux, d'huiles, en particulier des huiles végétales, des vitamines, des dérivés de vitamines, des matières odorantes, des parfums, des surgraissants, des composants régénérateurs, des émollients, des épaississants, des substances augmentant la viscosité, des tensioactifs ou des colorants.
